# EUROPÄISCHE PATENTSCHRIFT

(11) **EP 3 427 853 B1**
(45) Veröffentlichungstag und Bekanntmachung des Hinweises auf die Patenterteilung: **12.02.2020**
(21) Anmeldenummer: 18181653.9
(22) Anmeldetag: 04.07.2018
(51) Int. Cl.: B21D 5/00, B21D 5/02

(54) **HINTERANSCHLAGEINHEIT SOWIE DAMIT AUSGESTATTETE FERTIGUNGSANLAGE**
REAR STOP ELEMENT AND PRODUCTION ASSEMBLY WITH SAME
UNITÉ DE BUTÉE ARRIÈRE AINSI QU'INSTALLATION DE FABRICATION ÉQUIPÉE D'UNE TELLE UNITÉ DE BUTÉE ARRIÈRE

(30) Priorität: 05.07.2017 AT 505542017
(43) Veröffentlichungstag der Anmeldung: 16.01.2019
(73) Patentinhaber: TRUMPF Maschinen Austria GmbH & Co. KG., 4061 Pasching (AT)
(72) Erfinder: EDLBAUER, Richard, 4252 Liebenau (AT); KEPLINGER, Walter, 4184 Helfenberg (AT)
(74) Vertreter: Burger, Hannes

(56) Entgegenhaltungen:
- EP-A1- 1 772 204
- WO-A1-2012/151601
- WO-A1-2013/168082
- CH-A5- 668 035
- JP-A- 2012 024 828

## Beschreibung

Die Erfindung betrifft eine Hinteranschlageinheit für eine Fertigungsanlage zum Freibiegen oder Prägebiegen von einem aus einem Blech zu fertigenden Werkstück sowie eine mit einer derartigen Hinteranschlageinheit ausgestattete Fertigungsanlage.

Aus der CH 668 035 A5 ist eine Fertigungsanlage für das Biegen von aus Blech zu fertigenden Werkstücken mit einer Biegepresse, bei welcher am Pressbalken Werkzeugaufnahmen für ein Biegewerkzeug mit mindestens einem Biegestempel und mindestens einem Biegegesenk angeordnet sind, bekannt geworden. Auf der von einer Bedienseite abgewendeten Seite der Pressbalken ist ein Werkzeugspeicher hinter dem oberen Pressbalken angeordnet. Die zu speichernden Biegewerkzeuge sind ebenfalls hintereinander in Richtung der Tiefe des Maschinengestells in einer hängenden Anordnung an den dafür vorgesehenen Werkzeugspeicherplätzen angeordnet. Weiters umfasst die Fertigungsanlage eine Hinteranschlageinheit mit einem Anschlagelement, welches zum Positionieren des zu bearbeitenden Blechs auf der von der Bedienseite abgewendeten Seite der Pressbalken dient. Die Hinteranschlageinheit umfasst weiters eine Stell- bzw. Verfahrvorrichtung mit welcher die Hinteranschlageinheit und damit verbunden das Anschlagelement entsprechend der gewünschten Biegeposition für das Blech verfahren werden kann. Am Anschlagelement sind weiters Tragarme um eine horizontal liegende Achse schwenkbar gelagert. An Enden der Tragarme sind jeweils Haltebolzen angeordnet, welche in Ausnehmungen im jeweiligen Biegewerkzeug eingesetzt werden können. Eine weitere Ausbildung sieht einen über das Anschlagelement vertikal aufragenden Arm vor, von welchem ein Mitnehmerbolzen zur Manipulation des Biegewerkzeuges in Richtung auf die Pressbalken vorragt. Nachteilig dabei ist, dass nur ein begrenzter Anschlagbereich zur Verfügung steht.

Aus der WO 2012/151601 A1 ist eine Fertigungsanlage für das Freibiegen von aus einem Blech zu fertigenden Werkstücken mit einem Werkzeugwechselsystem bekannt geworden. Die Fertigungsanlage umfasst eine Biegepresse mit einem Maschinengestell und Pressbalken sowie an den Pressbalken angeordneten Werkzeugaufnahmen für ein Biegewerkzeug. Weiters ist ein Werkzeugspeicher, eine Hinteranschlageinheit mit einem Anschlagelement sowie eine Manipulationsvorrichtung zum Verbringen des Biegewerkzeuges zwischen dem Werkzeugspeicher und den Werkzeugaufnahmen vorgesehen. Das Anschlagelement und die Manipulationsvorrichtung sind an einem gemeinsamen Träger einander gegenüberliegend sowie in zueinander entgegengesetzter Ausrichtung angeordnet und um eine vertikale Schwenkachse drehbar gelagert. Der Träger ist von einer ersten Stellung, bei der das Anschlagelement dem in den Werkzeugaufnahmen gehaltenen Biegewerkzeug zugewendet ist, in eine zweite Stellung verschwenkbar, bei der die Manipulationsvorrichtung dem in den Werkzeugaufnahmen gehaltenen Biegewerkzeug zugewendet ist. Dabei ist nachteilig, dass auch hier der hinterhalb des Grundgestells der Hinteranschlageinheit vorhandene Freiraum innerhalb des Maschinengestells nicht für die Bearbeitung von größeren Werkstücken ausgenutzt werden konnte.

Aufgabe der vorliegenden Erfindung war es, die Nachteile des Standes der Technik zu überwinden und eine Hinteranschlageinheit sowie eine damit ausgestattete Fertigungsanlage zur Verfügung zu stellen, mittels derer ein Benutzer in der Lage ist, den hinterhalb des Biegewerkzeugs zur Verfügung stehenden Freiraum besser und optimaler auch für größere Biegeteile zu nutzen ohne dazu einen hohen maschinentechnischen Aufwand betreiben zu müssen.

Diese Aufgabe wird durch eine Hinteranschlageinheit sowie eine damit ausgestattete Fertigungsanlage gemäß den Ansprüchen gelöst.

Die erfindungsgemäße Hinteranschlageinheit ist zum Einsatz bei einer Fertigungsanlage vorgesehen, welche insbesondere zum Freibiegen oder Prägebiegen von einem aus einem Blech zu fertigenden Werkstück dient, wobei die Hinteranschlageinheit zumindest folgende Bauteile und/oder Bauteilkomponenten umfasst:
- einen Anschlagfinger mit zumindest einem daran angeordneten oder ausgebildeten ersten Anschlagelement mit einer ersten Anschlagfläche, wobei der Anschlagfinger eine Längserstreckung mit einem ersten Endbereich und einem davon distanziert angeordneten zweiten Endbereich aufweist,
- ein Grundgestell, an welchem Grundgestell der Anschlagfinger angeordnet ist, wobei in einer ersten Anschlagstellung des Anschlagfingers sein erster Endbereich und die erste Anschlagfläche des zumindest einen ersten Anschlagelements dem zu fertigenden Werkstück zuwendbar ist, wobei
- der Anschlagfinger weiters zumindest ein zweites Anschlagelement mit einer zweiten Anschlagfläche aufweist,
- eine Lageranordnung vorgesehen ist, welche Lageranordnung eine in horizontaler Richtung sowie in Normalrichtung bezüglich der Längserstreckung des Anschlagfingers verlaufend ausgerichtete Schwenkachse definiert und am Grundgestell angeordnet ist,
- der Anschlagfinger mit seinem zweiten Endbereich mittels der Lageranordnung am Grundgestell schwenkbar gelagert ist,
- der Anschlagfinger von seiner ersten Anschlagstellung in eine zweite Anschlagstellung um die Schwenkachse der Lageranordnung verschwenkbar ist und wobei
- in der zweiten Anschlagstellung die zweite Anschlagfläche des zumindest einen zweiten Anschlagelements dem zu fertigenden Werkstück zuwendbar ist.

Der dadurch erzielte Vorteil liegt darin, dass durch das Vorsehen eines einzigen Anschlagfingers und das daran Ausbilden oder Anordnen von mehreren Anschlagelementen eine Vielzahl von unterschiedlichen Anschlagstellungen für das daran zu positionierende Blech oder das Werkstück geschaffen werden können. Weiters kann durch die beiden aufgrund der schwenkbaren Lageranordnung in entgegengesetzter Richtung ragenden Anschlagstellungen des Anschlagfingers die Längserstreckung des Anschlagfingers jeweils nach der gewählten Anschlagstellung voll ausgenutzt werden. Befindet sich der Anschlagfinger in seiner ersten Anschlagstellung, bei welcher dieser in Richtung auf das Biegewerkzeug ragt, kann eine werkzeugnahe Anschlagbegrenzung erzielt werden. Befindet sich hingegen der Anschlagfinger in seiner zweiten Anschlagstellung, weist dieser eine bezüglich der ersten Anschlagstellung dazu entgegengesetzte Ausrichtung auf. Dadurch kann auch der hinterhalb der Lageranordnung befindliche Raum innerhalb des Maschinengestells zur Aufnahme des zu bearbeitenden Blechs genutzt werden. Somit kann auf einfache Art und Weise mit dem gleichen Anschlagfinger ein weiteres vom Biegewerkzeug und der von diesem gebildeten Biegelinie entferntes Anschlagelement geschaffen werden. Durch das Vorsehen der Lageranordnung wird so auf einfache Art und Weise die Möglichkeit geschaffen, den Anschlagfinger von einer dem Biegewerkzeug zugewendeten Position (erste Anschlagstellung) in eine davon abgewendete Position (zweite Anschlagstellung) zu verlagern. Damit kann eine Anschlagerweiterung der Hinteranschlageinheit geschaffen werden. Durch diese zusätzlich geschaffene Anschlagtiefe kann der Anschlagbereich und somit die Länge der anschlagbaren Schenkellängen des zu biegenden Blechs um bis zu 30 % und mehr erhöht werden.

Weiters kann es vorteilhaft sein, wenn ein Schwenkwinkel des Anschlagfingers zwischen seiner ersten Anschlagstellung und seiner zweiten Anschlagstellung 180° beträgt. Dadurch können einander exakt gegenüberliegend angeordnete Anschlagsstellungen des Anschlagfingers geschaffen werden.

Eine andere Ausführungsform zeichnet sich dadurch aus, dass der Anschlagfinger in beiden Anschlagstellungen jeweils eine parallele Ausrichtung bezüglich einer Horizontalebene aufweist. Durch die horizontale Ausrichtung des Anschlagfingers in beiden Anschlagstellungen kann so auch noch eine zusätzliche Auflagefläche und Unterstützung des daran zu positionierenden Blechs oder Werkstücks geschaffen werden.

Eine weitere mögliche Ausführungsform hat die Merkmale, dass die erste Anschlagfläche des zumindest einen ersten Anschlagelements von einer Stirnfläche des Anschlagfingers gebildet ist. Damit kann bei sich in der ersten Anschlagstellung befindlichem Anschlagfinger eine sehr werkzeugnahe Anschlagfläche für das zu positionierende Blech geschaffen werden.

Eine weitere Ausbildung sieht vor, dass weitere erste Anschlagflächen von weiteren ersten Anschlagelementen bei sich in der ersten Anschlagstellung befindlichem Anschlagfinger an einer Oberseite des Anschlagfingers angeordnet sind. Durch die Mehrfachanordnung von mehreren ersten Anschlagflächen kann so bei einer in vertikaler Richtung ("Y" - Richtung) erfolgten Auswahl und Positionierung der benötigten Anschlagfläche eine grobe Vorauswahl von einer dieser Anschlagflächen getroffen werden und eine zusätzliche Feinpositionierung durch Verlagerung des Anschlagfingers in "X" - Richtung erfolgen.

Eine andere Ausführungsform zeichnet sich dadurch aus, dass die zweite Anschlagfläche des zumindest einen zweiten Anschlagelements bei sich in der ersten Anschlagstellung befindlichem Anschlagfinger an einer Unterseite des Anschlagfingers angeordnet ist. Damit wird es möglich, dass bei sich in der ersten Anschlagstellung befindlichem Anschlagfinger keine zusätzlichen Anschlagflächen vorhanden sind, welche bei einer Anordnung und einer Positionierung des Blechs störend wirken können. Durch das Vorsehen und Anordnen des zumindest einen zweiten Anschlagelements an der Unterseite des Anschlagfingers kann dieses erst nach dem Umklappen und Umschwenken des Anschlagfingers in seine zweite Anschlagstellung aktiviert werden. In dieser zweiten Anschlagstellung ist dann die zuvor die Unterseite bildende Seite des Anschlagfingers dann an der Oberseite des Anschlagfingers angeordnet.

Eine weitere bevorzugte Ausführungsform ist dadurch gekennzeichnet, dass die zweite Anschlagfläche des zumindest einen zweiten Anschlagelements in einem Längsabschnitt des ersten Endbereichs des Anschlagfingers angeordnet oder ausgebildet ist. Damit wird die Möglichkeit geschaffen, die zweite Anschlagfläche so weit wie möglich distanziert von der Lageranordnung anzuordnen oder auszubilden. Damit kann bei sich in der zweiten Anschlagstellung befindlichem Anschlagfinger die zweite Anschlagfläche in einer ausreichend großen Distanz von der Lageranordnung und damit auch vom Biegewerkzeug angeordnet werden.

Weiters kann es vorteilhaft sein, wenn ein erstes Anschlagelement und ein diesem gegenüberliegend angeordnetes zweites Anschlagelement von einer im Anschlagfinger ausgebildeten Kröpfung gebildet sind. Durch das Ausbilden und Vorsehen einer Kröpfung zur Ausbildung von einander gegenüberliegend angeordneten ersten und zweiten Anschlagelementen kann so eine gestufte und im Längsquerschnitt gesehen Z-förmige Ausbildung des Anschlagfingers geschaffen werden. Damit wird es auf einfache Art und Weise möglich, sowohl an der Oberseite als auch an der Unterseite des Anschlagfingers jeweils ein erstes und ein zweites Anschlagelement ausbilden zu können.

Eine andere alternative Ausführungsform zeichnet sich dadurch aus, dass der Anschlagfinger in zumindest einer seiner Anschlagstellungen am Grundgestell oder der Lageranordnung abgestützt ist. Damit kann einfach eine Lagepositionierung des Anschlagfingers in zumindest einer seiner Anschlagstellungen geschaffen werden.

Eine weitere mögliche und gegebenenfalls alternative Ausführungsform hat die Merkmale, dass der Anschlagfinger in zumindest einer seiner Anschlagstellungen über ein Federelement am Grundgestell oder der Lageranordnung abgestützt ist. Damit kann eine mechanisch harte Abstützung des Anschlagfingers in zumindest einer seiner Stellungen am Grundgestell oder der Lageranordnung vermieden werden.

Eine weitere bevorzugte Ausführungsform ist dadurch gekennzeichnet, dass der Anschlagfinger vor dem Erreichen zumindest einer seiner Anschlagstellungen über ein Federelement am Grundgestell oder der Lageranordnung abgestützt ist und bei Erreichen der Anschlagstellung am Grundgestell oder der Lageranordnung abgestützt ist. So kann ein einfacher ungebremster Umklappvorgang des Anschlagfingers von einer seiner Anschlagstellungen in die andere Anschlagstellung durchgeführt werden, ohne dass dabei ein hartes Aufschlagen direkt am Grundgestell oder der Lageranordnung erfolgt.

Eine weitere Ausbildung sieht vor, dass der Anschlagfinger mit einem Antriebsmittel in Antriebsverbindung steht. Durch das Vorsehen eines Antriebsmittels kann so eine gerichtete und gesteuerte Umschwenkbewegung des Anschlagfingers von einer seiner Anschlagstellungen in die andere Anschlagstellung erfolgen.

Eine andere Ausführungsform zeichnet sich dadurch aus, dass die Lageranordnung bezüglich des Grundgestells zumindest in vertikaler Richtung relativ dazu verstellbar ist. Damit kann eine in vertikaler Richtung erfolgende Höhenanpassung der jeweils ausgewählten Anschlagfläche des Anschlagfingers erfolgen.

Zum besseren Verständnis der Erfindung wird diese anhand der nachfolgenden Figuren näher erläutert.

Es zeigen jeweils in stark vereinfachter, schematischer Darstellung:
- Fig. 1: eine Fertigungsanlage in Frontansicht, jedoch ohne der Hinteranschlageinheit;
- Fig. 2: die Fertigungsanlage nach Fig. 1 mit Hinteranschlageinheiten, in einer Hinteransicht sowie in schaubildlicher Darstellung;
- Fig. 3: einen Teilbereich der Hinteranschlageinheit, bei sich in der ersten Anschlagstellung befindlichem Anschlagfinger, in Seitenansicht;
- Fig. 4: die Hinteranschlageinheit nach Fig. 3, jedoch in der zweiten Anschlagstellung des Anschlagfingers, in Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine Vorgehensweise darstellen muss.

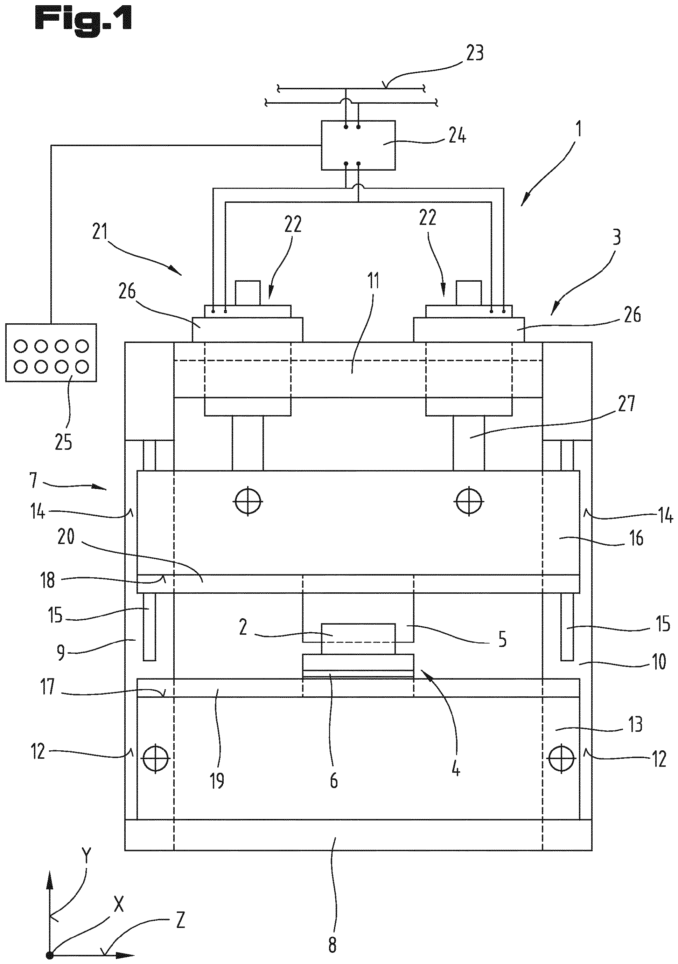

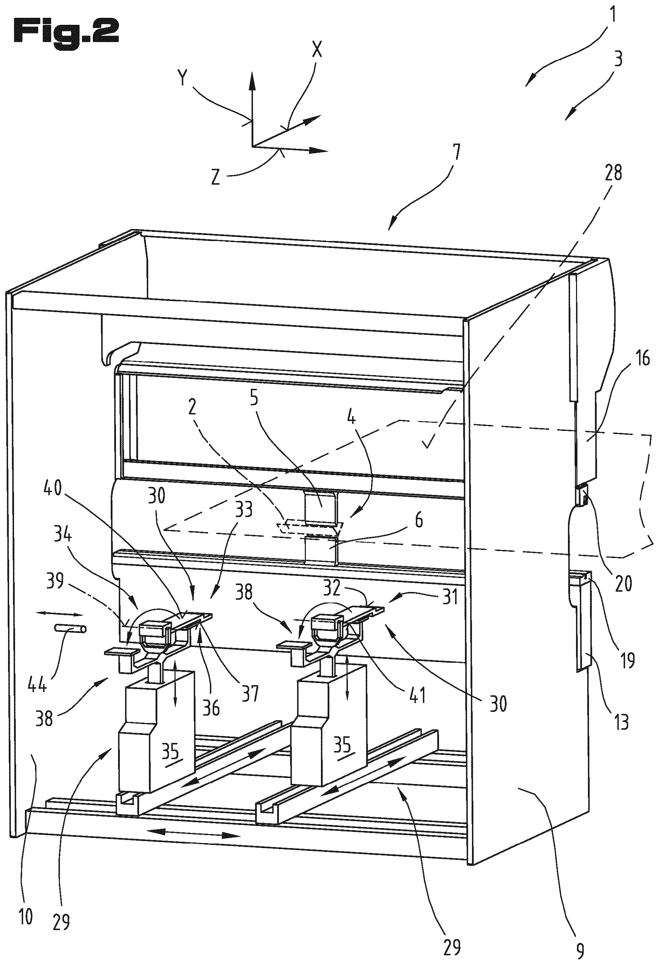

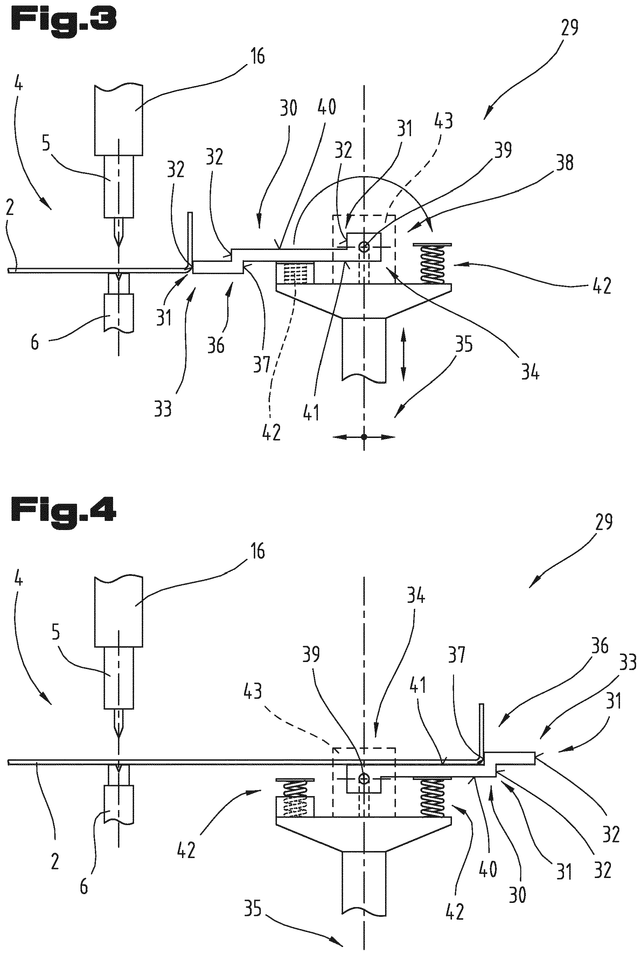

In den Fig. 1 und 2 ist eine Fertigungsanlage 1 in stark schematisch vereinfachter Darstellung gezeigt, welche im vorliegenden Fall insbesondere für das Freibiegen von aus Blech zu fertigenden Werkstücken 2 mittels Gesenkbiegen ausgebildet ist. Zur Bildung eines Hinteranschlags für das Blech oder das zu fertigende Werkstück 2 ist eine mögliche Anordnung und Ausbildung in den Fig. 3 und 4 näher dargestellt und beschrieben.

Die im vorliegenden Fall für das Biegen eingesetzte Fertigungsanlage 1 umfasst eine Biegemaschine, im vorliegenden Ausführungsbeispiel eine Biegepresse 3, insbesondere eine Abkantpresse oder Gesenkbiegepresse, zur Herstellung der Werkstücke 2 oder Werkteile zwischen zumindest einem relativ zueinander verstellbaren Biegewerkzeug 4. Das Biegewerkzeug 4 umfasst im vorliegenden Ausführungsbeispiel zumindest einen Biegestempel 5, zumeist jedoch mehrere Biegestempel 5, und zumindest ein Biegegesenk 6, zumeist jedoch mehrere damit zusammenwirkende Biegegesenke 6. Der zumindest eine Biegestempel 5 ist dabei oberhalb des zu fertigenden Werkstücks 2 an der Biegepresse 3 angeordnet und dort auch entsprechend gehalten, insbesondere geklemmt. Auch das zumindest eine Biegegesenk 6 ist an der Biegepresse 3 gehalten, insbesondere daran geklemmt gehalten.

Als Koordinatensystem wird bei derartigen Biegepressen 3 grundsätzliches als "X" - Richtung jene bezeichnet, welche in einer Horizontalebene sowie im rechten Winkel (in Normalrichtung) bezüglich der Längserstreckung des Biegewerkzeugs 4, insbesondere dessen Biegestempel 5 sowie Biegegesenk 6 verläuft. Somit ist dies jene Richtung, welche auch der Zufuhrrichtung oder der Entnahmerichtung entspricht. Als "Y" - Richtung wird die Vertikalrichtung verstanden, welche somit in Höhenrichtung des Biegewerkzeugs 4 und weiters im rechten Winkel und somit in Normalrichtung bezüglich der Horizontalebene verläuft. Schließlich wird als "Z" - Richtung jene Richtung verstanden, welche in Längsrichtung bzw. in der Längserstreckung des Biegewerkzeugs 4, insbesondere dessen Biegestempel 5 sowie Biegegesenk 6, verläuft. Damit ist auch die Längserstreckung der vom Biegewerkzeug 4 definierten Biegekante oder Biegelinie in der "Z" - Richtung verlaufend ausgerichtet.

Ein Maschinengestell 7 der Biegepresse 3 umfasst beispielsweise eine Bodenplatte 8, auf der vertikal aufragend, zueinander in Querrichtung beabstandet und parallel zueinander ausgerichtete Seitenwangen 9, 10 angeordnet sind. Diese sind bevorzugt durch einen massiven, beispielsweise aus einem Blechformteil gebildeten Querverband 11 an ihren von der Bodenplatte 8 distanzierten Endbereichen miteinander verbunden.

Die Seitenwangen 9, 10 können zur Bildung eines Freiraums für das Umformen des Werkstücks 2 etwa C - förmig ausgebildet sein, wobei an Frontstirnflächen 12 von bodennahen Schenkeln der Seitenwangen 9, 10 ein feststehender, insbesondere auf der Bodenplatte 8 aufstehender, erster Pressbalken 13 oder unterer Pressbalken 13 befestigt ist. Dieser ortsfest angeordnete und feststehende Pressbalken 13 kann auch als Presstisch bezeichnet werden, an welchem Teile des Biegewerkzeugs 4 angeordnet und auch gehalten sind. An Frontstirnflächen 14 von von der Bodenplatte 8 entfernten Schenkeln ist in Linearführungen 15 ein zu dem den Tischbalken bildenden Pressbalken 13 relativ verstellbarer weiterer Pressbalken 16, insbesondere ein Druckbalken, geführt gelagert. Der Pressbalken 16 kann auch als zweiter Pressbalken oder oberer Pressbalken aber auch als Druckbalken bezeichnet werden.

Auf einander gegenüberliegenden, parallel zueinander verlaufenden Stirnflächen 17, 18 der beiden Pressbalken 13, 16 können Werkzeugaufnahmen 19, 20 zur Bestückung mit dem oder den Biegewerkzeugen 4 angeordnet sein. Das oder die Biegewerkzeuge 4 können auch unter Zwischenschaltung eines nicht näher dargestellten Adapters an den Werkzeugaufnahmen 19, 20 gehalten sein, wobei dies für einen Wechselvorgang einzelner Komponenten oder des gesamten Biegewerkzeugs 4 eher als nicht günstig angesehen wird, jedoch auch eine Möglichkeit darstellen kann.

Die gezeigte Biegepresse 3 weist als Antriebsanordnung 21 für den verstellbaren Pressbalken 16, nämlich den Druckbalken, z.B. zwei mit elektrischer Energie betriebene Antriebsmittel 22 auf, die mit einer aus einem Energienetz 23 angespeisten Steuervorrichtung 24 leitungsverbunden sind. Über ein mit der Steuervorrichtung 24 kommunikationsverbundenes Eingabeterminal 25 kann beispielsweise der Betrieb der Biegepresse 3, insbesondere auch der Wechselvorgang des Biegewerkzeugs 4, gesteuert werden.

Bei den Antriebsmitteln 22 kann es sich z.B. um elektromotorische Spindeltriebe 26 handeln, wie sie allgemein bekannt sind, von denen Stellmittel 27 für eine reversible Stellbewegung des durch den Druckbalken gebildeten oberen Pressbalkens 16 mit diesem, zum Beispiel antriebsverbunden sind. Unabhängig davon wäre es aber auch noch möglich, das oder die Antriebsmittel 22 durch hydraulisch und/oder pneumatisch betätigbare Stellmittel zu bilden. Dabei können Zylinder-Kolbenanordnungen Anwendung finden. Es wären aber auch andere Antriebsmittel, wie z.B. Exzenterantriebe, Kniehebelantriebe, Zahnstangenantriebe usw. denkbar.

Auf weitere für den Betrieb einer derartigen Biegepresse 3 erforderliche Details, wie beispielsweise Zufuhrvorrichtungen, Kontroll- und/oder Messvorrichtungen, wird in der gegenständlichen Beschreibung zur Vermeidung einer unnötigen Länge der Beschreibung verzichtet.

Zur Auflage und Abstützung des zu biegenden Blechs kann im vorderen Bereich - also dem Zufuhrbereich - der Biegepresse ein Auflagetisch 28 vorgesehen oder angeordnet sein. Der Auflagetisch 28 ist nur teilweise dargestellt und bildet eine Auflageebene für das zu biegende Blech aus.

Weiters kann die Fertigungsanlage 1 auch noch einen hier nicht näher dargestellten Manipulator umfassen, welcher von einem Vorratsstapel von zu verformenden bzw. abzukantenden Blechen zumindest ein Stück davon entnimmt und in den Arbeitsbereich bzw. die Bedienseite der Biegepresse 3 verbringt.

Der Manipulator kann seinerseits eine Greifzange umfassen, die ihrerseits Greiffinger aufweist. Die Greiffinger weisen an der dem zu fertigenden Werkstück 2 zugewendeten Seite jeweils Klemmflächen auf. Durch eine entsprechende Verschwenkung der beiden Greiffinger gegeneinander und dem Aufbringen einer ausreichenden Klemmkraft, wird über das Zusammenwirken der Klemmflächen das Blech bzw. das zu fertigende Werkstück 2 vom Manipulator gehalten und entsprechend bewegt sowie positioniert. Mit den Greiffingern der Greifzange ist ein entsprechendes Greifen und in späterer Folge bedingt durch die Klemmbewegung ein ausreichender Halt für das aus dem Blech zu fertigende Werkstück 2 gewährleistet.

Unter Bedienseite wird hier jener Bereich an der Biegepresse 3 verstanden, von dem aus die Zuführung sowie Hantierung der umzuformenden Bleche hin zum fertigen Werkstück 2 erfolgt. Das Maschinengestell 7, insbesondere dessen Seitenwangen 9, 10 erstrecken sich ausgehend von der Bedienseite hin zu einer Rückseite des Maschinengestells 7, was in weiterer Folge als Tiefe bzw. Tiefenerstreckung der Biegepresse 3, insbesondere des Maschinengestells 7, bezeichnet wird. Die hier in Querrichtung der Biegepresse 3 voneinander distanzierten Seitenwangen 9, 10 des Maschinengestells 7 bilden eine Breite der Biegepresse 3 bzw. des Maschinengestells 7 aus, wobei sich in Richtung der Breite des Maschinengestells 7 gesehen, die Pressbalken 13, 16 mit den daran angeordneten bzw. ausgebildeten Werkzeugaufnahmen 19, 20 erstrecken.

Zwischen den Seitenwangen 9, 10 sowie auf der von der Bedienseite abgewendeten Seite der Pressbalken 13, 16 ist weiters zumindest eine, bevorzugt auch mehrere Hinteranschlageinheiten 29 vorgesehen bzw. angeordnet. Derartige Hinteranschlageinheiten 29 sind grundsätzlich bekannt und es wird, um die Beschreibung nicht unnötig zu verlängern, hier auf eine allgemeine Beschreibung verzichtet.

Die zumindest eine Hinteranschlageinheit 29 umfasst einen Anschlagfinger 30 mit zumeist mehreren in Anschlagrichtung gesehen hintereinander angeordneten oder ausgebildeten ersten Anschlagelementen 31, welche ersten Anschlagelemente 31 jeweils zum Positionieren des zu bearbeitenden Blechs auf der von der Bedienseite abgewendeten Seite der Pressbalken 13, 16 je nach Auswahl derselben dienen. An der zumindest einen Hinteranschlageinheit 29 ist ein einziger Anschlagfinger 30 vorgesehen, wobei dieser aber in zueinander unterschiedlichen Verwendungsrichtungen eingesetzt werden kann.

Das erste Anschlagelement 31 weist oder die ersten Anschlagelemente 31 weisen jeweils eine erste Anschlagfläche 32 für das daran in "X" - Richtung und somit in Tiefenrichtung bezüglich des Biegebereichs oder der Biegelinie für den Biegevorgang zu positionierende Blech oder das herzustellende Werkstück 2 auf. Der Anschlagfinger 30 weist üblicher Weise eine geringe Breite in "Z" - Richtung und eine dazu größere oder längere Längserstreckung in "X" - Richtung auf.

Zusätzlich ist der Anschlagfinger 30 und damit auch das zumindest eine erste Anschlagelement 31 relativ bezüglich des Maschinengestells 7 verstellbar. Diese Verstellmöglichkeit dient dazu, dass das zu verformende Blech beispielsweise am Biegegesenk 6 aufliegend soweit in Richtung der Tiefe des Maschinengestells 7 (in "X" - Richtung) hingeschoben werden kann, bis dass der Verschiebeweg durch das zuerst vorpositionierte erste Anschlagelement 31 mit seiner ersten Anschlagfläche 32 begrenzt ist. In diesem Zustand kommt zumeist eine Stirnkante oder ein bereits umgebogener Schenkel des zu biegenden Blechs an einem ersten Anschlagelement 31 des Anschlagfingers 30 zur Anlage. Je nach den Abmessungen des zu fertigenden Werkstücks ist der Anschlagfinger 30 und damit auch das zumindest eine erste Anschlagelement 31 mittels der gesamten Hinteranschlageinheit 29 verlagerbar und an den vordefinieren Stellen positionierbar.

Der Anschlagfinger 30 weist in Richtung seiner Längserstreckung in "X" - Richtung gesehen einen ersten Endbereich 33 und einen davon distanziert angeordneten zweiten Endbereich 34 auf. Weiters ist noch ein Grundgestell 35 vorgesehen, an welchem der Anschlagfinger 30 angeordnet, insbesondere daran gehalten ist. Unter Grundgestell 35 wird hier alles verstanden, mittels welchem der Anschlagfinger 30 gehalten und relativ bezüglich des Maschinengestells 7 verfahren und in der dazu vorbestimmten Position angeordnet werden kann. Die Verfahrbewegung oder Verstellbewegung des Grundgestells 35 kann in "X" - Richtung und/oder in "Z" - Richtung erfolgen. Auf die Darstellung von Verfahrantrieben oder Führungsanordnungen wurde der besseren Übersichtlichkeit halber zum größten Teil oder gänzlich verzichtet

In der hier dargestellten ersten Anschlagstellung des Anschlagfingers 30 ist sein erster Endbereich 33 und damit verbunden auch die erste Anschlagfläche 32 des zumindest einen ersten Anschlagelements 31 dem zu fertigenden Werkstück 2 zugewendet. In dieser ersten Anschlagstellung des Anschlagfingers 30 kann das zu biegende Blech oder das bereits vorgebogene Werkstück 2 bei geöffnetem Biegewerkzeug 4 ausgehend von der Bedienseite bis zu dem vorpositionierten ersten Anschlagelement 31 verbracht und daran angelegt werden.

Wie nun besser aus den Fig. 2 bis 4 zu ersehen ist, ist am selben Anschlagfinger 30 zusätzlich zu dem zumindest einen ersten Anschlagelement 31 zumindest ein zweites Anschlagelement 36 mit einer zweiten Anschlagfläche 37 vorgesehen. Dieser ist weitestgehend plattenförmig ausgebildet, und weist Vorsprünge und/oder Abstufungen zur Ausbildung der Anschlagelemente 31 und/oder 36 auf. Weiters ist am Grundgestell 35 eine Lageranordnung 38 vorgesehen, von welcher eine Schwenkachse 39 definiert ist. Die Schwenkachse 39 weist eine in horizontaler Richtung verlaufende Längserstreckung auf und ist zusätzlich in einer Normalrichtung bezüglich der Längserstreckung des Anschlagfingers 30 verlaufend ausgerichtet. Weiters weist die Schwenkachse 39 eine parallele Ausrichtung bezüglich der "Z" - Richtung oder "Z" - Achse auf.

Der Anschlagfinger 30 ist mit seinem zweiten Endbereich 34 mittels der Lageranordnung 38 am Grundgestell 35 schwenkbar gelagert. Damit wird es möglich, den Anschlagfinger 30 ausgehend von seiner ersten Anschlagstellung, bei welcher dieser in Richtung auf das Biegewerkzeug 4 oder die Pressbalken 13, 16 ragend angeordnet ist, in eine dazu in entgegengesetzter Richtung ragende zweite Anschlagstellung zu verschwenken. Grundsätzlich wird jenes Anschlagelement oder werden jene Anschlagelemente, welches oder welche in der ersten Anschlagstellung dem Biegewerkzeug 4 zugewendet sind, als erste Anschlagelemente 31 bezeichnet. Jenes Anschlagelement oder jene Anschlagelemente, welche in der zweiten Anschlagstellung dem Biegewerkzeug 4 für die positionierte Anlage des Blechs oder des Werkstücks 2 zugewendet sind, werden als zweite Anschlagelemente 36 bezeichnet.

Die grundsätzliche Ausrichtung und Anordnung des Anschlagfingers 30 erfolgt in einer horizontalen Ebene, wobei die jeweiligen Anschlagflächen 32, 37 der Anschlagelemente 31, 36 in einer Normalrichtung - also im rechten Winkel - zu der horizontalen Ebene ausgerichtet sind.

Weiters sind die Anschlagflächen 32, 37 in ihrer Längserstreckung in paralleler Richtung bezüglich der Biegelinie oder der Pressbalken 13, 16 verlaufend angeordnet.

Ist der Anschlagfinger 30 in seine zweite Anschlagstellung oder Anschlagposition verstellt worden, ist die zweite Anschlagfläche 37 des zumindest einen zweiten Anschlagelements 36 dem zu fertigenden Werkstück 2 zugewendet, wodurch das zu biegende Blech daran positioniert abgestützt werden kann.

Wie zuvor beschrieben, ist die grundsätzliche Ausrichtung und Anordnung des Anschlagfingers 30 bezüglich seiner Flachseiten in einer horizontalen Richtung und somit in einer parallelen Ausrichtung bezüglich einer Horizontalebene. Damit beträgt ein Schwenkwinkel des Anschlagfingers 30 zwischen seiner ersten Anschlagstellung und seiner zweiten Anschlagstellung 180°, womit in beiden Anschlagstellungen die horizontale Ausrichtung erfolgt.

Je nach Ausbildung und Anordnung des Anschlagfingers 30 kann dieser auch mehrere erste Anschlagflächen 32 aufweisen. Diese können in Richtung der Längserstreckung des Anschlagfingers 30 hintereinander sowie voneinander beabstandet oder voneinander distanziert angeordnet oder ausgebildet sein. Ein erstes Anschlagelement 31 mit seiner ersten Anschlagfläche 32 kann z.B. von einer Stirnfläche des Anschlagfingers 30 gebildet sein.

Befindet sich der Anschlagfinger 30 in seiner ersten Anschlagstellung, können auch noch weitere erste Anschlagflächen 32 von weiteren ersten Anschlagelementen 31 an einer Oberseite 40 des Anschlagfingers 30 angeordnet sein. Da diese zumeist in vertikaler Richtung in zueinander unterschiedlichen Positionen und damit voneinander distanziert oder voneinander beabstandet angeordnet oder ausgebildet sind, ist die Lageranordnung 38 für den Anschlagfinger 30 bezüglich des Grundgestells 35 zumindest in vertikaler Richtung ("Y" - Richtung) relativ dazu verstellbar anzuordnen und am Grundgestell 35 zu führen. Auf die Darstellung eines Stellantriebes oder einer Führungsanordnung wurde der besseren Übersichtlichkeit halber verzichtet. Mittels dieser Verstellbewegung der Lageranordnung 38 und damit auch verbunden des Anschlagfingers 30 kann eine Anpassung und Ausrichtung der jeweils ausgewählten ersten Anschlagfläche 32 oder der jeweils ausgewählten zweiten Anschlagfläche 37 bezüglich des daran abzustützenden Blechs oder Werkstücks 2 durchgeführt werden. Die vertikale Höhenanpassung der jeweiligen Anschlagfläche 32 oder 37 ist zumeist derart durchzuführen, dass das zu biegende Blech auf dem Biegegesenk 6 aufliegt und bevorzugt auch in diesem Bereich oder Abschnitt eine horizontale Ausrichtung aufweist.

Bei gleicher unveränderter Stellung - nämlich der ersten Anschlagstellung - des Anschlagfingers 30 befindet sich die zweite Anschlagfläche 37 des zumindest einen zweiten Anschlagelements 36 an einer Unterseite 41 des Anschlagfingers 30. Weiters ist bevorzugt die zweite Anschlagfläche 37 des zumindest einen zweiten Anschlagelements 36 im Bereich oder in einem Längs- oder Endabschnitt des ersten Endbereichs 33 des Anschlagfingers 30 angeordnet oder ausgebildet. Die Bezeichnung der Oberseite 40 und der Unterseite 41 bezieht sich auf die Darstellung in der Fig. 3 mit der ersten Anschlagstellung des Anschlagfingers 30. Nach der Durchführung der Schwenkbewegung von der ersten Anschlagstellung in die zweite Anschlagstellung - siehe Fig. 4 - ist dann jene Flachseite, welche in der Fig. 3 die Oberseite 40 gebildet hat, an der Unterseite angeordnet. Gleiches gilt in umgekehrter Richtung für die Unterseite 41, welche dann in der zweiten Anschlagstellung an der Oberseite angeordnet ist. Der Anschlagfinger 30 ist bevorzugt überwiegend als Flachprofil ausgebildet, welches in Richtung seiner Längserstreckung zur Bildung der Anschlagelemente 31, 36 gestuft oder abgestuft ist.

Es wäre auch noch möglich, dass ein erstes Anschlagelement 31 und ein diesem gegenüberliegend angeordnetes zweites Anschlagelement 36 von einer im Anschlagfinger 30 ausgebildeten Kröpfung gebildet sind. Damit weist der Anschlagfinger 30 bezüglich seiner Längserstreckung zwischen dem ersten Endbereich 33 und dem zweiten Endbereich 34 im Abschnitt der zumindest einen Kröpfung einen Z-förmig ausgebildeten Querschnitt auf. Die gegenüberliegende Anordnung des ersten Anschlagelements 31 und des zweiten Anschlagelements 36 ist auf die beiden Flachseiten des Anschlagfingers 30 bezogen. Damit ist erste Anschlagelement 31 und das diesem gegenüberliegend angeordnete zweite Anschlagelement 36 in Richtung der Längserstreckung des Anschlagfingers 30 geringfügig zueinander versetzt angeordnet. Es wäre aber auch möglich, den Anschlagfinger 30 durchgängig, gegebenenfalls mit Ausnahme der Lageranordnung 38, plattenförmig auszubilden und das zumindest eine erste Anschlagelement 31 und/oder das zumindest eine zweite Anschlagelement 36 als über die Oberfläche oder die Flachseite vorragende Rippe oder Steg auszubilden.

Um eine definierte Ausrichtung des Anschlagfingers 30 bezüglich des Grundgestells 35 zu erzielen, kann der Anschlagfinger 30 in zumindest einer seiner Anschlagstellungen, bevorzugt jedoch in beiden seiner Anschlagstellungen direkt am Grundgestell 35 oder einem Teil der Lageranordnung 38 abgestützt sein. Dies in der Fig. 2 schematisch angedeutet.

Die Abstützung kann auch noch mittels eines zwischengeschalteten Federelements 42 am Grundgestell 35 oder einem Teil der Lageranordnung 38 erfolgen. Dies ist in den Fig. 3 und 4 jeweils rechts neben der Schwenkachse 39 vereinfacht dargestellt.

Es wäre aber auch noch denkbar, dass zu Dämpfungszwecken bei der Lageänderung des Anschlagfingers 30 zwischen seinen beiden Anschlagstellungen der Anschlagfinger 30 noch vor dem Erreichen und Einnehmen der endgültigen Anschlagstellung über ein Federelement 42 am Grundgestell 35 oder einem Teil der Lageranordnung 38 gedämpft abgestützt ist und in der endgültigen Anschlagstellung dann direkt am Grundgestell 35 oder einem Teil der Lageranordnung 38 anliegend abgestützt ist. Das Federelement 42 oder Dämpfungselement kann z.B. von einer Spiralfeder, einem Kunststoffkörper oder einer Spiralblattfeder gebildet sein. Dies ist in den Fig. 3 und 4 jeweils links neben der Schwenkachse 39 vereinfacht dargestellt.

Zur Durchführung der Schwenkbewegung des Anschlagfingers 30 kann dieser mit einem schematisch vereinfacht angedeuteten Antriebsmittel 43, wie z.B. einem Schwenkantrieb, einer Zylinder-Kolbenanordnung oder dergleichen, in Antriebsverbindung stehen. Es wäre aber auch ein manuell von einer Bedienperson durchzuführender Umklappvorgang möglich.

Das Umstellen oder Umklappen des Anschlagfingers 30 zwischen seinen beiden Anschlagstellungen kann auch noch durch eine kombinierte Verstellbewegung der Lageranordnung 38 bezüglich des Grundgestells 35 sowie des Grundgestells 35 bezüglich des Maschinengestells 7 durchgeführt werden.

So kann z.B. in dem in der Steuervorrichtung 24 abgespeicherten Biegeprogramm hinterlegt oder vorgegeben sein, dass bei dem durchzuführenden Biegevorgang ein erweiterter Anschlagbereich - im vorliegenden Fall die zweite Anschlagstellung des Anschlagfingers 30 - erforderlich ist. Das Umklappen des Anschlagfingers 30 erfolgt dann automatisch bei der Schrittweiterschaltung. Das Grundgestell 35 fährt mit dem Anschlagfinger 30 in jenen Bereich oder Abschnitt der Biegepresse 3, in welchem die Schwenk- oder Klappbewegung durchgeführt werden soll. Idealerweise ist dies der hintere Bereich einer der Seitenwangen 9, 10. Dort ist ein Anschlagelement 44 angeordnet - siehe Fig. 2 bei der dort links befindlichen Seitenwange 10 -, welches zur Durchführung des Umklappvorgangs dient. Das Anschlagelement 44 kann z.B. durch einen Bolzen aus Kunststoff oder Metall gebildet sein. Das Ausfahren desselben aus der Seitenwange 10 kann pneumatisch od. elektromagnetisch durchgeführt werden. Der Anschlagfinger 30 fährt mit der ohnehin vorhandenen Kinematik der Hinteranschlageinheit 29 von oben auf das ausgefahrene Anschlagelement 44, welches als Umklapphilfe oder als Umklappelement dient. Durch eine abgestimmte und koordinierte Verstellbewegung in der "X" - Richtung und der "Y" - Richtung bzw. deren Achsrichtung wird ein sanftes Umklappen des Anschlagfingers 30 um die Schwenkachse 39 ermöglicht.

Das Umklappen oder Umschwenken des Anschlagfingers 30 von einer Anschlagstellung in seine andere Anschlagstellung kann durch nachfolgend angegebene Verfahrensschritte erfolgen. Als Ausgangsstellung wird die erste Anschlagstellung des Anschlagfingers 30 angenommen.

Es wird zumindest ein Anschlagelement 44 vorgesehen, welches nach der Positionierung des Anschlagfingers 30 mittels des verfahrbaren Grundgestells 35 mit dem Anschlagfinger 30 in eine überdeckende Lage verbracht wird. Der Anschlagfinger 30 wird oberhalb des Anschlagelements 44 befindlich angeordnet. Weiters ist das Anschlagelement 44 in "X" - Richtung von der Lageranordnung 38 des Anschlagfingers 30 beabstandet angeordnet und befindet sich somit entweder vor oder hinterhalb der Lageranordnung 38. Grundsätzlich kann das Anschlagelement 44 während des Schwenk- oder Umklappvorgangs ortsfest angeordnet bleiben. Anschließend wird der Anschlagfinger 30 in "Y" - Richtung soweit in Richtung auf eine Aufstandsfläche (Boden) mittels des Grundgestells 35 verstell, bis der Anschlagfinger 30 am Anschlagelement 44 anliegt. Durch eine kombinierte Verstellbewegung des Grundgestells 35 und dem daran gelagerten Anschlagfinger 30 weiter in "Y" - Richtung und somit in Richtung auf die Aufstandsfläche (Boden) sowie eine Verstellbewegung des Grundgestells 35 mitsamt der Lageranordnung 38 in Richtung auf das Anschlagelement 44 kann die Lageänderung des Anschlagfingers 30 durchgeführt werden. Weist der Anschlagfinger 30 eine in vertikaler Richtung nach oben (in "Y" - Richtung) aufragende Stellung auf, kann das weitere Verbringen in die andere Anschlagstellung einfach durch das Eigengewicht des Anschlagfingers 30 bevorzugt selbsttätig erfolgen. In der in vertikaler Richtung nach oben aufragenden Stellung befindet sich die Lageranordnung 38 in etwa unterhalb des Anschlagelements 44.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fertigungsanlage | 31 | erstes Anschlagelement |
| 2 | Werkstück | 32 | erste Anschlagfläche |
| 3 | Biegepresse | 33 | erster Endbereich |
| 4 | Biegewerkzeug | 34 | zweiter Endbereich |
| 5 | Biegestempel | 35 | Grundgestell |
| 6 | Biegegesenk | 36 | zweites Anschlagelement |
| 7 | Maschinengestell | 37 | zweite Anschlagfläche |
| 8 | Bodenplatte | 38 | Lageranordnung |
| 9 | Seitenwange | 39 | Schwenkachse |
| 10 | Seitenwange | 40 | Oberseite |
| 11 | Querverband | 41 | Unterseite |
| 12 | Frontstirnfläche | 42 | Federelement |
| 13 | Pressbalken | 43 | Antriebsmittel |
| 14 | Frontstirnfläche | 44 | Anschlagelement |
| 15 | Linearführung | | |
| 16 | Pressbalken | | |
| 17 | Stirnfläche | | |
| 18 | Stirnfläche | | |
| 19 | Werkzeugaufnahme | | |
| 20 | Werkzeugaufnahme | | |
| 21 | Antriebsanordnung | | |
| 22 | Antriebsmittel | | |
| 23 | Energienetz | | |
| 24 | Steuervorrichtung | | |
| 25 | Eingabeterminal | | |
| 26 | Spindeltrieb | | |
| 27 | Stellmittel | | |
| 28 | Auflagetisch | | |
| 29 | Hinteranschlageinheit | | |
| 30 | Anschlagfinger | | |

## Patentansprüche

1. Hinteranschlageinheit (29) für eine Fertigungsanlage (1) zum Freibiegen oder Prägebiegen von einem aus einem Blech zu fertigenden Werkstück (2) umfassend
- einen Anschlagfinger (30) mit zumindest einem daran angeordneten oder ausgebildeten ersten Anschlagelement (31) mit einer ersten Anschlagfläche (32), wobei der Anschlagfinger (30) eine Längserstreckung mit einem ersten Endbereich (33) und einem davon distanziert angeordneten zweiten Endbereich (34) aufweist,
- ein Grundgestell (35), an welchem Grundgestell (35) der Anschlagfinger (30) angeordnet ist, wobei in einer ersten Anschlagstellung des Anschlagfingers (30) sein erster Endbereich (33) und die erste Anschlagfläche (32) des zumindest einen ersten Anschlagelements (31) dem zu fertigenden Werkstück (2) zuwendbar ist,
**dadurch gekennzeichnet,**
- **dass** der Anschlagfinger (30) weiters zumindest ein zweites Anschlagelement (36) mit einer zweiten Anschlagfläche (37) aufweist,
- **dass** eine Lageranordnung (38) vorgesehen ist, welche Lageranordnung (38) eine in horizontaler Richtung sowie in Normalrichtung bezüglich der Längserstreckung des Anschlagfingers (30) verlaufend ausgerichtete Schwenkachse (39) definiert und am Grundgestell (35) angeordnet ist,
- **dass** der Anschlagfinger (30) mit seinem zweiten Endbereich (34) mittels der Lageranordnung (38) am Grundgestell (35) schwenkbar gelagert ist,
- **dass** der Anschlagfinger (30) von seiner ersten Anschlagstellung in eine zweite Anschlagstellung um die Schwenkachse (39) der Lageranordnung (38) verschwenkbar ist und
- **dass** in der zweiten Anschlagstellung die zweite Anschlagfläche (37) des zumindest einen zweiten Anschlagelements (36) dem zu fertigenden Werkstück (2) zuwendbar ist.

2. Hinteranschlageinheit (29) nach Anspruch 1, **dadurch gekennzeichnet, dass** ein Schwenkwinkel des Anschlagfingers (30) zwischen seiner ersten Anschlagstellung und seiner zweiten Anschlagstellung 180° beträgt.

3. Hinteranschlageinheit (29) nach Anspruch 1 oder 2, **dadurch gekennzeichnet, dass** der Anschlagfinger (30) in beiden Anschlagstellungen jeweils eine parallele Ausrichtung bezüglich einer Horizontalebene aufweist.

4. Hinteranschlageinheit (29) nach einem der vorhergehenden Ansprüche, **dadurch gekennzeichnet, dass** die erste Anschlagfläche (32) des zumindest einen ersten Anschlagelements (31) von einer Stirnfläche des Anschlagfingers (30) gebildet ist.

5. Hinteranschlageinheit (29) nach einem der vorhergehenden Ansprüche, **dadurch gekennzeichnet, dass** weitere erste Anschlagflächen (32) von weiteren ersten Anschlagelementen (31) bei sich in der ersten Anschlagstellung befindlichem Anschlagfinger (30) an einer Oberseite (40) des Anschlagfingers (30) angeordnet sind.

6. Hinteranschlageinheit (29) nach einem der vorhergehenden Ansprüche, **dadurch gekennzeichnet, dass** die zweite Anschlagfläche (37) des zumindest einen zweiten Anschlagelements (36) bei sich in der ersten Anschlagstellung befindlichem Anschlagfinger (30) an einer Unterseite (41) des Anschlagfingers (30) angeordnet ist.

7. Hinteranschlageinheit (29) nach einem der vorhergehenden Ansprüche, **dadurch gekennzeichnet, dass** die zweite Anschlagfläche (37) des zumindest einen zweiten Anschlagelements (36) in einem Längsabschnitt des ersten Endbereichs (33) des Anschlagfingers (30) angeordnet oder ausgebildet ist.

8. Hinteranschlageinheit (29) nach einem der vorhergehenden Ansprüche, **dadurch gekennzeichnet, dass** ein erstes Anschlagelement (31) und ein diesem gegenüberliegend angeordnetes zweites Anschlagelement (36) von einer im Anschlagfinger (30) ausgebildeten Kröpfung gebildet sind.

9. Hinteranschlageinheit (29) nach einem der vorhergehenden Ansprüche, **dadurch gekennzeichnet, dass** der Anschlagfinger (30) in zumindest einer seiner Anschlagstellungen am Grundgestell (35) oder der Lageranordnung (38) abgestützt ist.

10. Hinteranschlageinheit (29) nach einem der vorhergehenden Ansprüche, **dadurch gekennzeichnet, dass** der Anschlagfinger (30) in zumindest einer seiner Anschlagstellungen über ein Federelement (42) am Grundgestell (35) oder der Lageranordnung (38) abgestützt ist.

11. Hinteranschlageinheit (29) nach einem der Ansprüche 1 bis 9, **dadurch gekennzeichnet, dass** der Anschlagfinger (30) vor dem Erreichen zumindest einer seiner Anschlagstellungen über ein Federelement (42) am Grundgestell (35) oder der Lageranordnung (38) abgestützt ist und bei Erreichen der Anschlagstellung am Grundgestell (35) oder der Lageranordnung (38) abgestützt ist.

12. Hinteranschlageinheit (29) nach einem der vorhergehenden Ansprüche, **dadurch gekennzeichnet, dass** der Anschlagfinger (30) mit einem Antriebsmittel (43) in Antriebsverbindung steht.

13. Hinteranschlageinheit (29) nach einem der vorhergehenden Ansprüche, **dadurch gekennzeichnet, dass** die Lageranordnung (38) bezüglich des Grundgestells (35) zumindest in vertikaler Richtung relativ dazu verstellbar ist.

14. Fertigungsanlage (1) zum Freibiegen oder Prägebiegen von einem aus einem Blech zu fertigenden Werkstück (2) umfassend
- eine Biegepresse (3) mit einem Maschinengestell (7) und Pressbalken (13, 16) sowie einem an den Pressbalken (13, 16) gehaltenen Biegewerkzeug (4),
- zumindest eine Hinteranschlageinheit (29) für das Blech oder das zu fertigende Werkstück (2),
**dadurch gekennzeichnet,**
- **dass** die zumindest eine Hinteranschlageinheit (29) nach einem der vorhergehenden Ansprüche ausgebildet ist.

## Claims

1. A rear stop unit (29) for a production plant (1) for air bending or bottom bending of a workpiece to be manufactured from a sheet metal (2), comprising
- a stop finger (30) with at least one first stop element (31) arranged or formed thereon and having a first stop surface (32), wherein the stop finger (30) comprises a longitudinal extension with a first end region (33) and a second end region (34) arranged at a distance therefrom,
- a base rack (35), with the stop finger (30) being arranged on said base rack (35), wherein in a first stopping position of the stop finger (30), its first end region (33) and the first stop surface (32) of the at least one first stop element (31) can face the workpiece (2) to be manufactured,
**characterized in**
- **that** the stop finger (30) further comprises at least one second stop element (36) with a second stop surface (37),
- **that** a bearing arrangement (38) is provided, said bearing arrangement (38) defining a pivot axis (39) oriented to extend in the horizontal direction as well as in the perpendicular direction with respect to the longitudinal extension of the stop finger (30) and being arranged on the base rack (35),
- **that** the stop finger (30) with its second end region (34) is mounted pivotably on the base rack (35) by means of the bearing arrangement (38),
- **that** the stop finger (30) can be pivoted from its first stopping position into a second stopping position about the pivot axis (39) of the bearing arrangement (38), and
- **that** in the second stopping position, the second stop surface (37) of the at least one second stop element (36) can face the workpiece (2) to be manufactured.

2. The rear stop unit (29) according to claim 1, **characterized in that** a pivot angle of the stop finger (30) between its first stopping position and its second stopping position amounts to 180°.

3. The rear stop unit (29) according to claim 1 or 2, **characterized in that** the stop finger (30) is in a parallel orientation with respect to a horizontal plane in both stopping positions.

4. The rear stop unit (29) according to one of the preceding claims, **characterized in that** the first stop surface (32) of the at least one first stop element (31) is formed by an end face of the stop finger (30).

5. The rear stop unit (29) according to one of the preceding claims, **characterized in that** further first stop surfaces (32) of further first stop elements (31) are arranged on an upper side (40) of the stop finger (30) with the stop finger (30) being located in the first stopping position.

6. The rear stop unit (29) according to one of the preceding claims, **characterized in that** the second stop surface (37) of the at least one second stop element (36) is arranged on a bottom side (41) of the stop finger (30) with the stop finger (30) being located in the first stopping position.

7. The rear stop unit (29) according to one of the preceding claims, **characterized in that** the second stop surface (37) of the at least one second stop element (36) is arranged or formed in a longitudinal section of the first end region (33) of the stop finger (30).

8. The rear stop unit (29) according to one of the preceding claims, **characterized in that** a first stop element (31) and a second stop element (36) arranged opposite thereof are formed by an offset formed in the stop finger (30).

9. The rear stop unit (29) according to one of the preceding claims, **characterized in that** the stop finger (30) is supported on the base rack (35) or on the bearing arrangement (38) in at least one of its stopping positions.

10. The rear stop unit (29) according to one of the preceding claims, **characterized in that** the stop finger (30) is supported on the base rack (35) or on the bearing arrangement (38) via a spring element (42) in at least one of its stopping positions.

11. The rear stop unit (29) according to one of claims 1 to 9, **characterized in that** the stop finger (30) is supported on the base rack (35) or on the bearing arrangement (38) via a spring element (42) prior to reaching at least one of its stopping positions and that it is supported on the base rack (35) of on the bearing arrangement (38) once it has reached the stopping position.

12. The rear stop unit (29) according to one of the preceding claims, **characterized in that** the stop finger (30) is drive-connected to a driving means (43).

13. The rear stop unit (29) according to one of the preceding claims, **characterized in that** the bearing arrangement (38) is adjustable with respect to the base rack (35) at least in the vertical direction relative to it.

14. A production plant (1) for air bending or bottom bending of a workpiece (2) to be manufactured from a sheet metal, comprising
- a bending press (3) having a machine frame (7) and press beams (13, 16) as well as a bending tool (4) held on the press beams (13, 16),
- at least one rear stop unit (29) for the sheet metal or the workpiece (2) to be manufactured,
**characterized in that**
- the at least one rear stop unit (29) is designed according to one of the preceding claims.

## Revendications

1. Unité de butée arrière (29) pour une installation de fabrication (1) pour le pliage en l'air ou le pliage en frappe d'une pièce (2) à fabriquer en tôle comprenant
- un doigt de butée arrière (30) avec au moins un premier élément de butée (31) disposé ou réalisé dessus, avec une première surface de butée (32), le doigt de butée (30) présentant une extension longitudinale avec une première partie d'extrémité (33) et une deuxième partie d'extrémité (34) disposée à distance de celle-ci,
- un châssis de base (35), le doigt de butée (30) étant disposé sur ce châssis de base (35), moyennant quoi, dans une première position de butée du doigt de butée (30), sa première partie d'extrémité (33) et la première surface de butée (32) de l'au moins un premier élément de butée (31) peut être orientée vers la pièce à fabriquer (2),
**caractérisée en ce que**
- le doigt de butée (30) comprend en outre au moins un deuxième élément de butée (36) avec une deuxième surface de butée (37),
- une disposition de palier (38) est prévue, cette disposition de palier (38) définissant un axe de pivotement (39) orienté de façon à s'étendre dans la direction horizontale ainsi que dans la direction normale par rapport à l'extension longitudinale du doigt de butée (30) et étant disposé sur le châssis de base (35),
- le doigt de butée (30) est monté, avec sa deuxième partie d'extrémité (34), au moyen de la disposition de palier (38), de manière pivotante sur le châssis de base (35),
- le doigt de butée (30) peut être pivoté de la première position de butée vers une deuxième position de butée autour de l'axe de pivotement (39) de la disposition de palier (38) et
- dans la deuxième position de butée, la deuxième surface de butée (37) de l'au moins un deuxième élément de butée (36) peut être orientée vers la pièce à fabriquer (2).

2. Unité de butée arrière (29) selon la revendication 1, **caractérisée en ce qu'**un angle de pivotement du doigt de butée (30) entre sa première position de butée et sa deuxième position de butée est de 180°.

3. Unité de butée arrière (29) selon la revendication 1 ou 2, **caractérisée en ce que** le doigt de butée (30) présente, dans les deux positions de butée, une orientation parallèle à un plan horizontal.

4. Unité de butée arrière (29) selon l'une des revendications précédentes, **caractérisée en ce que** la première surface de butée (32) de l'au moins un premier élément de butée (31) est constituée d'une face frontale du doigt de butée (30).

5. Unité de butée arrière (29) selon l'une des revendications précédentes, **caractérisée en ce que** d'autres premières surfaces de butée (32) d'autres premiers éléments de butée (31) sont disposées sur un côté supérieur (40) du doigt de butée (30) lorsque le doigt de butée (30) se trouve dans la première position de butée.

6. Unité de butée arrière (29) selon l'une des revendications précédentes, **caractérisée en ce que** la deuxième surface de butée (37) de l'au moins un deuxième élément de butée (36) est disposée sur un côté inférieur (41) du doigt de butée (30) lorsque le doigt de butée (30) se trouve dans la première position de butée.

7. Unité de butée arrière (29) selon l'une des revendications précédentes, **caractérisée en ce que** la deuxième surface de butée (37) de l'au moins un deuxième élément de butée (36) est disposée ou réalisée dans une portion longitudinale de la première partie d'extrémité (33) du doigt de butée (30).

8. Unité de butée arrière (29) selon l'une des revendications précédentes, **caractérisée en ce qu'**un premier élément de butée (31) et un deuxième élément de butée (36) disposé en face de celui-ci sont constitués d'un coude réalisé dans le doigt de butée (30).

9. Unité de butée arrière (29) selon l'une des revendications précédentes, **caractérisée en ce que** le doigt de butée (30) est appuyé, au moins dans une de ses positions de butée, contre le châssis de base (35) ou la disposition de palier (38).

10. Unité de butée arrière (29) selon l'une des revendications précédentes, **caractérisée en ce que** le doigt de butée (30) est appuyé, au moins dans une de ses positions de butée, par l'intermédiaire d'un élément à ressort (42), contre le châssis de base (35) ou la disposition de palier (38).

11. Unité de butée arrière (29) selon l'une des revendications 1 à 9, **caractérisée en ce que** le doigt de butée (30) est appuyé, avant d'atteindre au moins une de ses positions de butée, par l'intermédiaire d'un élément à ressort (42), contre le châssis de base (35) ou la disposition de palier (38) et, lorsque la position de butée est atteinte, est appuyé contre le châssis de base (35) ou la disposition de palier (38).

12. Unité de butée arrière (29) selon l'une des revendications précédentes, **caractérisée en ce que** le doigt de butée (30) est en liaison d'entraînement avec un moyen d'entraînement (43).

13. Unité de butée arrière (29) selon l'une des revendications précédentes, **caractérisée en ce que** la disposition de palier (38) peut être réglée par rapport au châssis de base (35) au moins dans la direction verticale.

14. Installation de fabrication (1) pour le pliage en l'air ou le pliage en frappe d'une pièce à fabriquer (2) en tôle, comprenant
- une presse plieuse (3) avec un bâti de machine (7) et des barres de presse (13, 16) ainsi qu'un outil de pliage (4) maintenu sur les barres de presse (13, 16),
- au moins une unité de butée arrière (29) pour la tôle ou la pièce à fabriquer (2), **caractérisée en ce que**
- l'au moins une unité de butée arrière (29) est conçue selon l'une des revendications précédentes.
